# EUROPEAN PATENT SPECIFICATION

(11) **EP 2 280 563 B1**
(45) Date of publication and mention of the grant of the patent: **01.10.2014**
(21) Application number: 09165238.8
(22) Date of filing: 10.07.2009
(51) Int. Cl.: H04W 4/02, H04L 29/08

(54) **Method and system for adaptive wireless services in augmented environments**
Verfahren und System für adaptive drahtlose Dienste in vergrößerten Umgebungen
Procédé et système pour services adaptatifs sans fil dans des environnements augmentés

(43) Date of publication of application: 02.02.2011
(73) Proprietor: Deutsche Telekom AG, 53113 Bonn (DE)
(72) Inventor: Alpcan, Tansu, 10625 Berlin (DE); Bauckhage, Christian, 53225 Bonn (DE); Liu, Xing, 10555 Berlin (DE)
(74) Representative: Vossius & Partner

(56) References cited:
- GB-A- 2 428 349
- US-A1- 2007 060 098
- US-B1- 6 571 279

## Description

### Field of the invention

The present invention relates to a system, method, computer program and digital storage medium containing such computer program for providing adaptive services to mobile wireless communication devices. Proximity or location information about the wireless communication devices are used by at least one host to select and/or adapt services which are provided to the respective communication devices by using at least one wireless access point.

### Background of the invention

Modem smart phones have become powerful mobile computing devices. Despite their small sizes they are equipped with a multitude of sensors and network interfaces allowing them to communicate with other devices over different channels. In addition, communication technologies such as Bluetooth, Wi-Fi, WiMax, Infrared, and UMTS facilitate a location-based exchange of personalized (multimedia) data when combined with GPS or RFID tags. At the same time, wearable, head-mounted displays have become available at affordable prices. In this invention, an architecture is presented that is built upon the convergence of these trends.

Mobile services constitute the center of the present system. Although first conceptualized about a decade ago, mobile services on smart phones were for a long time confined to primitive Web browsing (e.g. WAP). Recently, rich web applications such as Google maps have extended the range of mobile services towards more advanced and location-based use cases. Another exemplary popular Web application, Twitter, bridges online communities of cell phone users and bloggers but is still missing a closer integration with the physical world.

The idea of ubiquitous computing, too, has been around for years. However, it appears that it still is more of a buzzword rather than a technology that is accessible by the general public. The omnipresence of cell phones and progress in the area of ad-hoc networking, on the other hand, suggest that nowadays the basic technologies are finally available to make ubiquitous computing a reality.

The paradigm of augmented reality is yet another concept that has been discussed for years but again appears to be more in the domain of science-fiction rather than becoming a technological reality. The paradigm of an interface, which actively analyzes its current surroundings and produces an enriched view for the user, requires sophisticated signal processing algorithms for auditory and visual analysis of signals recorded by, say wearable microphones or cameras. However, corresponding algorithms that are flexible and robust enough to be deployed in everyday environment and can be used by ordinary people do not yet exists. This approach has inadvertently become a major obstacle in the efforts trying to realize augmented reality architectures.

On the other hand, if everyday environments and objects become information sources themselves, existing technologies can be used to process these and to display them to the user. TWO dimensional QR codes, which have been successful in some communities can be seen as a primitive proof-of-concept application of this alternative approach.

Finally, location based services are among the hottest topics in mobile computing in recent years. Location information not only distinguishes mobile computing from the existing Internet, but also plays the bridging role between virtual and physical environments. GPS-based traffic assistance devices, albeit being specific purpose, are precursors of a rich ecosystem of potential services and have been rapidly adopted by the general public.

Thanks to these parallel developments, early adopters are being rapidly surrounded by ubiquitous computing services, which are destined to become an integral part of daily life of general public in the next decade. Mobile applications are, however, mostly static, platform-specific, and closed when compared to the services we all enjoy within the virtual environment the Internet provides. While this is partly due to hardware (e.g. battery, bandwidth) limitations, vendor lock-in, and form-factor issues, the main reason is arguably the lack of an open architecture similar to the one on the Internet. Fortunately, with recent developments such as rapidly advancing mobile computing devices (in the form of smartphones or netbooks), improvements in bandwidth with next generation wireless networks, and the arrival of the mobile Internet, this limited situation is expected to change and a fertile ground for ubiquitous computing is slowly emerging.

Recent developments in the area of wireless sensor networks make them easier to program and more usable than ever before. At the same time numerous sensor network solutions and platforms are emerging. Due to their favorable properties such as their small size, low cost, and flexibility, sensor networks can be used to make the physical world more interactive. For example, sensor networks can be used to monitor the health condition of patients or wireless sensors are deployed as a signal broadcasting agent to address tracking problems in either indoor or outdoor environments.

With the emergence of Web 2.0 trends, there is concurrently an explosion in dynamic Web platforms making development and deployment of Web-based applications much easier than before. For example, the Turbogears web programming framework is based on the highly regarded Python web framework. It facilitates sophisticated and flexible prototyping in very short amount of time when compared to other present web frameworks while not sacrificing code quality.

The document US 2004/0189675 A1 presents an augmented reality system and the document US6064749 proposes a hybrid tracking for augmented reality using both camera motion detection and video tracking of landmarks. In US 2007/0038944 A1 an augmented reality system is described, which comprises means for gathering image data of a real environment, means for generating virtual image data from said image data, means for identifying a predefined marker object of the real environment based on the image data, and means for superimposing a set of object image data with the virtual image data at a virtual image position corresponding to the predefined marker object. US 2006/0038833 A1 presents a portable augmented reality device with display screen and image capture.

In GB 2 428 349 A a method for supplying a service in a mobile network is shown.

### Summary of the invention

The object of the present invention is to provide a system, method, computer program and digital storage medium containing such computer program for providing adaptive services to mobile wireless communication devices. This object is achieved with the features of the claims.

Further, as discussed below, the method and system according to the present invention also relate to
1. an architecture that combines existing technologies to create a working initial augmented environment based on wireless web services and sensor networks, such as for example, without relying on video or image capture,
2. methods for collecting usage data through the hybrid sensor and wireless network services,
3. presentation of adaptive services utilizing user modeling such as targeted advertisement.

For example, according to the invention, mobile (location-based) services, ubiquitous computing, and augmented reality concepts can be combined such to bring the kind of information-rich environment, which is currently limited to computer screens, to the real physical world of mobile communication. This can be achieved according to the invention by constructing an architecture based on existing wireless web applications and sensor network technologies. The users of the system and objects in the environment are associated, such as by using individual sensors. In this example, the system collects proximity information between objects and users which can then, for example, be used by the web application server to provide adaptive services over wireless web. The individual objects in the surrounding environment of the users may according to the invention become hubs of local, interactive, and adaptive services, creating an information-rich and interactive environment that is similar to the one on the Internet.

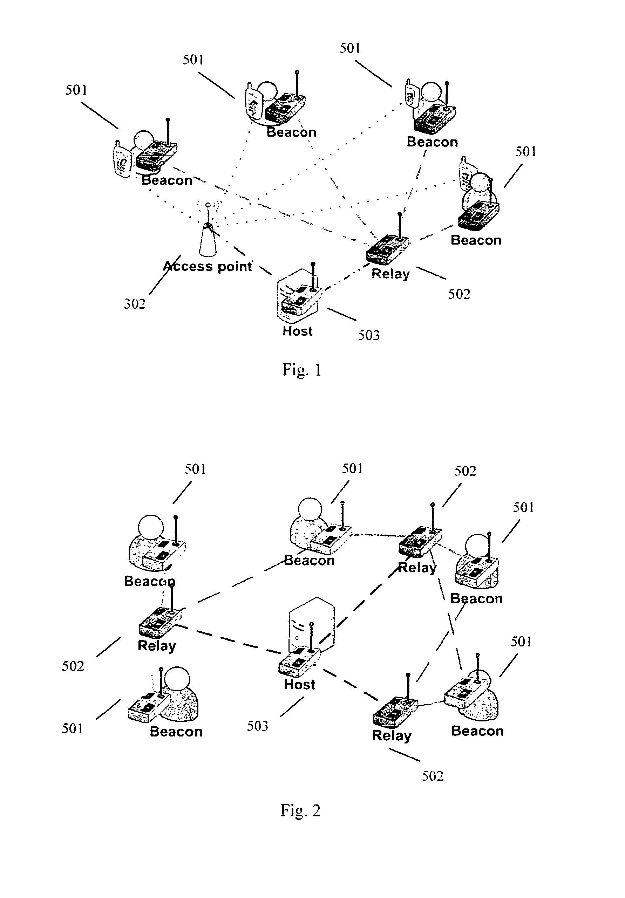

An embodiment of the present invention relates to a hybrid networking architecture for ubiquitous computing based on a combination of a wireless sensor network and a web application server operating over 802.11x Wi-Fi network as depicted in Fig. 1. The wireless sensors are both attached to physical augmented objects (relays) and carried by users (as beacons) to give both a presence in the virtual environment (e.g. Internet) and associate them with certain services. Using the strength of broadcast signals on the sensor networks, location or proximity of users are obtained with respect to augmented objects. Hence, the system creates a rich interactive augmented environment that is similar to the one on the Internet. In this setting, the location or proximity information provided by the sensor network bridges the physical world with the virtual one. At the same time, it is a key for organizing data and services in a very natural way; thus decreasing the existing and potential information overload associated with virtual environments.

One aspect of the present invention relates to a system for providing adaptive services to mobile wireless communication devices of a mobile wireless network, wherein the mobile wireless network comprises:
- at least one mobile wireless communication device,
- at least one wireless access point for communicating with the at least one wireless communication device,
- at least one host server being in communication with the at least one wireless access point,
- at least one sensor means being in communication with the at least one host server, wherein the at least one sensor means provides the at least one host server with proximity or location information about the at least one mobile wireless communication devices, wherein the at least one host server uses the at least one wireless access point to provide services to the at least one mobile wireless communication devices, wherein the provided services are selected and/or adapted by the at least one host according to the proximity or location information corresponding to the respective mobile wireless communication device.

The at least one sensor means comprises a sensor network, preferably a sensor network comprising sensor motes, wherein the sensor network is preferably a wireless sensor network.

Respective service related objects which are located within the coverage area of the mobile wireless network comprise relay motes of the sensor network which collect proximity or location information about mobile wireless communication devices located in the vicinity of the respective service related object. It is further preferred that the mobile wireless communication devices comprise a beacon mote broadcasting messages to the relay motes, wherein the messages are further preferred broadcasted periodically.

The respective sensor means comprises a gateway connected to the at least one host server, wherein the gateway receives proximity or location information about mobile wireless communication devices from the relay motes, such as for example wirelessly. The proximity or location information about mobile wireless communication devices received by the gateway preferably comprises a received signal strength indicator (RSSI), wherein the received signal strength indicator (RSSI) provides spatial information about a wireless communication device relative to a service related object.

The respective at least one wireless access point for communicating with the wireless communication devices is preferably a Bluetooth, Wi-Fi, WiMax, Infrared or UMTS network access point.

It is preferred that the respective services provided by the at least one host to the one wireless communication device of the mobile wireless network and which are selected and/or adapted according to the proximity or location information corresponding to the respective wireless communication device is a web-based application, further preferred comprising dynamic contents, and even further preferred providing social-network platform or collaborative working platform services.

It is also preferred that the service provided by the at least one host server to a wireless communication device of the mobile wireless network and which is selected and,/or adapted according to the proximity or location information corresponding to the respective wireless communication device is invoked when the respective wireless communication device approaches a service related object located within the coverage area of the mobile wireless network and wherein the service is related to the approached object. It is also preferred to use AJAX web technologies in combination with the at least one sensors means.

The service provided by the at least one host server to a wireless communication device of the mobile wireless network and which is selected and/or adapted according to the proximity or location information corresponding to the respective wireless communication device is preferably further selected and/or adapted according to preferences and/or activities of the user of the respective wireless communication device over time.

Preferably, the users of the wireless communication devices of the mobile wireless network are identified by the at least one host server using digital identities for providing privacy based services. It is also preferred that a wireless communication device of the mobile wireless network temporarily associates its beacon mote with a respective digital identity taken from a common pool corresponding to a service provided by the at least one host server, preferably during a respective login.

The at least one host server preferably comprises a database containing information about said preferences and/or activities of the user of the respective wireless communication device over time.

Another aspect of the present invention relates to a method for providing adaptive services to users of a mobile wireless network comprising at least one wireless communication device, at least one sensor means, at least one host server and at least one access point, comprising the steps of:
- using the at least one sensor means to determine proximity or location information about the at least one mobile wireless communication device,
- using the determined proximity or location information about the wireless communication device to select and/or adapt a service according to the proximity or location information corresponding to the respective wireless communication device,
- providing the selected and/or adapted service to the respective wireless communication device by having the at least one host server use the at least one wireless access point of the mobile wireless network to communicate with the mobile wireless communication device.

It is preferred that the step of selecting and/or adapting a service according to the proximity or location information corresponding to the respective wireless communication device further comprises the step of evaluating information about the activity of the user of the respective wireless communication device over time.

It is also preferred that the step of evaluating information about the activity of the respective user over time comprises the step of utilizing a user model which is preferably related to targeted advertisement.

The step of selecting and/or adapting a service according to the proximity or location information corresponding to a wireless communication device or the step of evaluating information about the activity the respective user of the tireless communication device over time preferably comprises steps of machine learning and/or optimization.

It is also preferred that the step of selecting and/or adapting a service according to the proximity or location information corresponding to the respective wireless communication device comprises the step of evaluating proximity or location information to relate a wireless communication device's proximity or location to a service related object, wherein it is further preferred that the proximity or location information comprises a received signal strength indicator (RSSI).

A further aspect of the present invention relates to a computer program performing the steps of the method described above. Yet another aspect of the present invention relates to a digital storage medium containing such computer program.

### Brief description of the drawings

Preferred embodiments of the invention are described in more detail below with reference to the attached drawings, which are by way of example only. It is shown in
Fig. 1 an overview of a proposed augmented environment architecture,
Fig. 2 an example wireless sensor network as part of the augmented environment,
Fig. 3 a message stack of relay motes,
Fig. 4 an illustration of example system implementation,
Fig. 5 a system with simulated data,
Fig. 6 a high level overview of an augmented environment,
Fig. 7 a depiction of a wireless sensor network,
Fig. 8 a depiction of a wireless (e.g. Wi-Fi local area) network,
Fig. 9 an example architecture of the server.

### Detailed description of preferred embodiments

This section describes preferred embodiment of the present invention. In particular, it describes the architecture of a potential model as well as an example implementation.

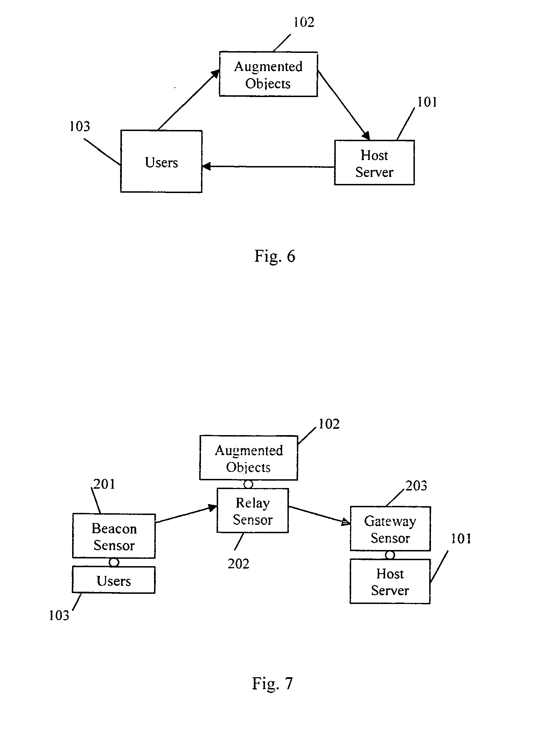

Fig. 6 depicts a high level overview of an exemplary preferred embodiment with an augmented environment. The host server 101 lies at the center of the system and receives information from augmented objects 102 relaying location information regarding mobile wireless communication devices which are, e.g., held by users 103. Using this data, the server 101 provides adaptive wireless services to the respective mobile wireless communication devices held by the users 103 on behalf of augmented objects 102.

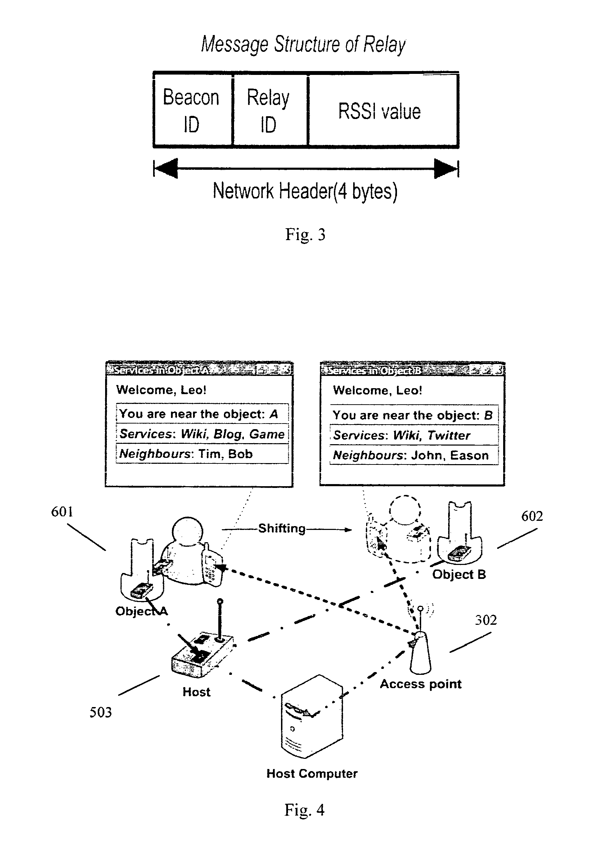

Fig. 7 shows one embodiment of a wireless sensor network, which provides the proximity information between augmented objects 102 and users 103. Each user 103 carries a beacon sensor 201, which periodically broadcasts a message containing the identity of the sensor. These messages are then received by static relay sensors 202 located at augmented objects, and forwarded to the Gateway sensor 203 at the host server 101. An example message structure is shown in Fig. 3 and will be described further below. Thus, the server 101 periodically receives information about the relative location of the user 103 with respect to augmented objects 102.

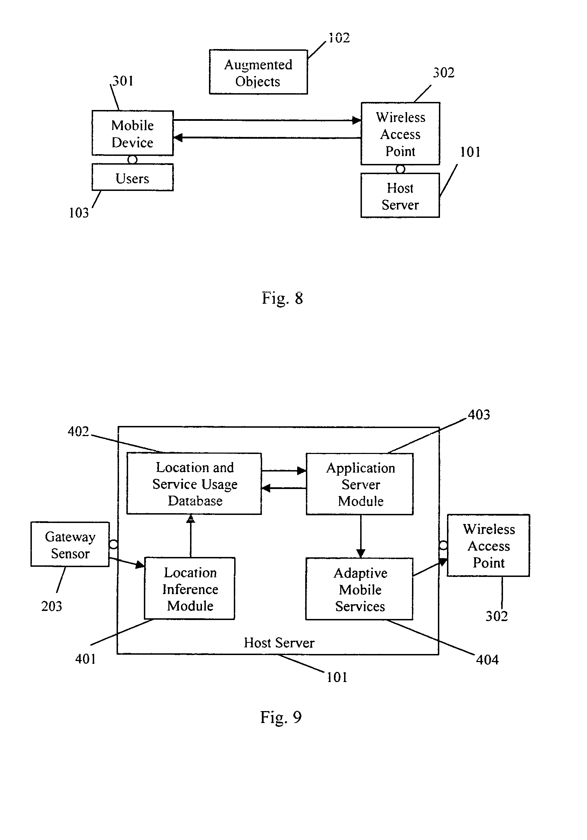

Fig. 8 depicts the operation of an embodiment of a wireless network, which can be implemented for example as a Wi-Fi local area network. The mobile devices 301 carried by users 103 have the wireless communication technologies such as Wi-Fi to communicate with the wireless access point 302 at the host server over a distance. The host server provides a variety of wireless adaptive services on behalf of the augmented objects 102 to the users carrying the mobile devices 301 which are received and displayed on the mobile device 301. At the same time the user interacts with these services using the same device 301, and hence indirectly with the virtual representations of the objects 102 at the server 101.

Fig. 9 shows an exemplary functionality of the host server 101. Here, the proximity information between users and augmented objects is received by the gateway sensor 203 and forwarded to the location inference module 401 within the server 101. The location inference module 401 determines the relative locations of the users, which are for example holding wireless mobile communication devices, and enters this data to the location and service usage database 402. This database 402 interacts with the application server module 403, which contains the application logic. The application server module 403 also records the service usage by the users in the database 402. Finally, the individual adaptive mobile services 404, supported by the application server module 403, are provided to the users over the wireless access point 302.

A preferred embodiment of the present invention provides a flexible, user-friendly, and cost-efficient system to realize an augmented environment. The system consists of off-the-shelf components such as a wireless sensor network of TelosB motes using TinyOS, 802.11x Wi-Fi access point, an open source web application server (TurboGears), and smart phones as end user devices. The system allows users and developers continue to use the tools they are familiar with. It is hence both user and developer friendly as well as cost efficient. In addition, the modular and standard-based approach brings a lot of flexibility. The services are provided to the users as web services, which support a wide range of end user devices. Each one of the three parts: mobile devices, application server, and sensor motes providing proximity information can be replaced by alternatives. For example, if a scale beyond object-level is considered, GPS can be used to obtain location and/or proximity information rather than a sensor network. If desired, virtual reality goggles may be used instead of phone screens as user displays. Finally, the application server, too, can be easily replaced with another one.

In a preferred embodiment, the proposed system analyzes the received signal strength indicator (RSSI) value in order to determine the proximity of a user holding a wireless mobile communication device to augmented objects and to provide adaptive location-based services. Also, a variety of location and usage information is collected and stored in a database. This data is post-processed in order to adapt to individual user needs and provide advanced services using machine learning and optimization methods. Privacy of individual users is preserved as multiple users can use the same sensor mote at different times and may have multiple virtual identities (e.g. login names) which might not be linked to real world identities.

According to a preferred embodiment of the present invention, a standard wireless sensor network is deployed and creates a virtual environment that includes user proximity information. Specifically, TelosB wireless sensor motes are deployed as part of the system. Each TelosB mote contains an 8 MHz Texas Instruments MSP430 microcontroller and a IEEE 802.15.4 compliant RF transceiver (CC2420) with a globally compatible ISM band between 2.4 and 2.4835 GHz capable of 250 kbps data transmission rate. In addition, it has 10KB RAM and 1MB external flash-based storage capacity for data logging. Compared with other wireless sensors, TelosB distinguishes itself through low-power consumption, hardware write protection, and flexible and robust configuration of the programming module. One attractive property of TelosB is the utilization of the IEEE 802.15.4 standard, which facilitates wireless communication in an energy-efficient way. The received signal strength indicator (RSSI), which characterizes link quality, can be used as an inexpensive and feasible approach to estimate the distance between the sensor nodes. Thus, using the correlation between the link quality between sensor nodes with their distance, we obtain proximity information between sensor nodes (objects and communication devices, e.g. held by users) and, in this preferred embodiment, the sensor network provides the proximity information needed to adapt location-based web services. Depending on the actual system requirements in terms of cost, usability, and use case scenarios, the wireless sensor network or the specific type of mote (TelosB) can be replaced with another solution, e.g. RFID, to provide the needed proximity information..

Fig. 2 shows a preferred embodiment of a wireless sensor network having the three types of motes: beacon 501, relay 501 and host 503.

The preferred beacon mote 501 performs the signal transmission and is in this example consistently carried by the mobile user. Through IEEE 802.15.4 Wireless Channel, it broadcasts a well-defined radio packet periodically, whose message stack includes a unique mote ID, with which each mobile user or the beacon mote itself could be accurately identified. It should be pointed out that sufficient RF sending power should be used, such to avoid that due to radio irregularity, not all the broadcasted packets from the beacon successfully reach the target. This situation can result in consecutive packet loss and could deteriorate the proximity detection performance. For example, the RF sending power of a beacon could preferably be set to the maximal level.

The preferred relay motes 502 differ from beacon 501 by their message stack and functionality. Each relay motes 502 is associated with an objects in the environment. As shown in Fig. 3, it is preferred that the message stack of the relay motes consists of 4 bytes in total with three block items, indicating beacon ID (1 byte), relay ID (1 byte), as well as the RSSI value (2 bytes). The relay 502 measures the RSSI value of each incoming radio packet and also receives the beacon ID in order to identify the source of the radio packet. Together with its own relay ID, the received radio packet is forwarded to the remote host 101.

Radio messages sent by a relay 502 are received by the host 503 and preferably forwarded to the host server 101 for post-processing. In particular, the preferred host mote 503 not only collects radio messages from the relays 502 but also acts as a gateway between the application server and sensor network to bridge data streaming. Consequently, after the host mote 503 receives each radio packet sent by a relay, the proximity information is posted immediately to a connected computer via, for example, a USB interface.

The beacon 501, relay 502, and host motes 503 described above are building blocks of the preferred sensor network. Further, in order to consider requirements such as good tracking accuracy or low power consumption, the motes can be programmed appropriately to achieve a desired robust system performance. In this regard, several issues which may impact the system's performance are addressed below. The first of these is the timer setting in beacon motes 501.

The respective timer relates, for example, to a component provided by TinyOS that allows for programming of synchronous events. For beacon 501 in particular, it preferred that the radio packets are broadcasted to nearby relays periodically. For example, the following code snippet sets a periodic interval of one second for broadcasting events:

```
uses interface Timer<TMilli>;
...
call Timer.startPeriodic(1000);
event void Timer.fired() {
   // Broadcasting the signal
   ...
  }
```

Whenever the timer is triggered, the beacon 501 will be activated and then broadcast radio packets periodically, which are used to infer proximity information of users. On the one hand, since the relay motes 502 may not be able to listen to the wireless channel constantly, setting a long timer interval in a beacon 501 will inevitable cause packet losses and thus lead to tracking inaccuracy when users are moving quickly between objects. On the other hand, choosing a very short period is not necessarily appropriate, since the tracking accuracy also depends on the relay 502 behavior. Furthermore, excessive dissemination can produce redundant RSSI values and increases energy consumption of the beacon 501. Thus, the timer is preferably set such that power consumption is low but proximity information of moving users can be determined accurately.

The preferred host 503 acting as a gateway is attached to a computer and is electrically powered. A possible problem in the radio power management of motes can be related to the relays 502 being attached to objects in the environment. A relay mote 502 can be regarded as a "message carrier", receiving incoming radio packets and then forwarding them to the next destination, e.g. immediately. In a preferred embodiment, the relay motes 502 are running on batteries and are attached to objects in order to detect proximity of users. If the relays keep their radio continuously alive in order not to miss broadcast packets from beacon motes, the batteries of motes can deplete rapidly and thus lead to forwarding failure. Having an electrical power supply for each relay 502 is not always possible or practical. In a preferred embodiment of the invention, the low-power listening technique provided by TinyOS which allows for a low power radio operation during listening, is deployed. Here, in low-power listening mode, a mote keeps its radio alive long enough to detect a carrier on the wireless channel. If it detects a carrier, it will stay on to detect further packets. Should it then receive a packet, the mote will stay awake long enough to receive a second packet and received packets will be directly forwarded to the next node instead of sending individual packets at a fixed constant rate. The following exemplary code snippet sets the radio sleeping interval to 2 seconds so that the mote will sleep and perform an carrier check for every 2 seconds:

```
uses interface LowPowerListening as LPL;
...
event void Boot.booted() {
   call LPL.setLocalSleepInterval(2000);
   call AMControl.start();
}
```

Another way to achieve this relates to an alternative interface:

```
uses interface LowPowerListening as LPL;
...
event void Boot.booted() {
    call LPL.setLocalDutyCycle(100);
   call AMControl.start();
}
```

In this example, by calling setLocalDutyCycle (100) one can set a 1% duty cycle rate of radio on the mote. By applying the Low-Power Listening technique, one may set the mote into sleeping mode and save more energy. However, depending on the specific system requirements, the sleeping interval has to be set so properly such that an appropriate balance between tracking accuracy and power consumption is achieved.

In preferred embodiments of the invention, the relay motes 502 receive, process and finally forward each beacon's packet to the host 503. A growing number of users in the environment may lead to higher packet traffic between beacon and relay, which will then consume more energy, as long as it keeps the radio awake, such as for example continuously. In a preferred embodiment, the relay 502 can be configured to send multiple beacon messages to the host bundled in batch mode to save energy and decrease traffic. However, this also introduces a certain amount of delay for proximity detection. In this regard, the number of users, the timer period of beacon together with sleeping interval of relay constitute an optimal control problem within the sensor network, where the objectives of tracking accuracy of users and power consumption of sensors have to be balanced.

A preferred embodiment of the present invention uses a Wi-Fi network. It consists of a server working in conjunction with the host 503 of the sensor network and smart phones as clients. In this embodiment, the services provided are Web applications and the clients are plug-and-play devices which may not need any configuration.

The application side of the framework can, for example, be implemented as a database-driven Web application running on the state of the art Python based Web framework Turbogears. On the server side, user proximity information as well as activity on certain services are preferably recorded, time stamped and stored in the database and then used for post-processing. On the client side, each mobile user preferably receives periodically refreshed contents and adaptive services in the form of interactive web applications, which are dynamically generated based on his location and data profile.

In a preferred embodiment, the Wi-Fi network provides a technical platform, on which web-based applications are designed and developed for ubiquitous computing. The proposed applications can for example include several social-networking services such as Twitter, a Wiki, as well as other dynamic contents. Such services are designed according to the present invention to be location-based and adaptively rendered to the end-user over the Wi-Fi network.

For example Twitter is a social-network platform and has constantly gained popularity over the last few years. It is a micro-blogging platform that enables users to broadcast short messages (tweets) and read other users' updates. A Wiki is a collaborative working platform and knowledge sharing management system, where anyone can access, contribute or modify the content. Both these applications have an important place in modem social networking and enable new ways of interaction between people. In accordance with the present invention, such applications can be explored and extended in an augmented environment, wherein users might for example interact with and communicate via interactive objects. Furthermore, location and/or proximity information and/or data histories of users can be recorded by web-based applications in order to filter out redundant information or services and to improve the quality of interaction in the augmented environment.

A preferred system according to the present invention is shown in Fig. 1. In this embodiment, relay motes 502 are attached to certain objects and user's proximity information is forwarded to the host 503 and determined in near real-time. Whenever a user (carrying a beacon mote 501) approaches an object, the beacon mote ID as well as the proximity information is posted to the server which, in turn, will invoke the server to return an object-based service and user-specific content to the user's smart phone over the Wi-Fi Network.

Fig. 4 demonstrates user activities in an illustrative example scenario. In this example, the mobile users first register an account through the Web interface on their mobile phone, They are asked to provide a username and a password and have to enter the ID of the beacon mote they are carrying. Subsequently, they are redirected to a Web page, where user-specific contents are displayed. At the same time, object-based services are provided, as long as the user location can be determined through RSSI information received by the host 503 and server. Once the user moves from the vicinity of an object A 601 towards another object B 602, the corresponding object-based services of object B will be updated and displayed on the mobile phone. Therefore, if several objects in an environment are augmented with relays, a user can obtain and use various services which are specific for the respective objects.

Providing dynamic applications with respect to spatial location of the user is one aspect of adaptive services. Another notion of service adaptability is based on the activity of individual users over time. Consider again the above scenario. If user interactions with augmented objects and their respective services are recorded in the system database, behavior and usage patterns and preferences can be processed and analyzed by the system to create a series of adaptive and dynamically generated services in the augmented environment.

Turbogears is a state-of-the-art web programming framework based on Python web frameworks, allowing for sophisticated and flexible prototyping in a very short amount of time. In preferred embodiments of the present invention, wherein between the host mote running TinyOS and the Python-based TurboGears web application server, a small Java program is deployed, in order to send the obtained RSSI values to the host computer and thus to bridge the data stream between the host mote and Web application server.

Privacy and security can play an important role in applying augmented environments in accordance with the present invention. In this regard, for example two principles can be applied to ensure privacy of the subjects taking part. First, the digital identity of users may be configured to be independent of their real identities. Hence, users can for example decide on their own privacy level in the system and maintain anonymity by having multiple digital identities created on the fly. Furthermore, each user can for example choose different beacon motes from a common pool by associating the mote with the respective digital identity, for example during login for a limited time. Secondly, conventional Web application security methods can be used to provide security in the system. Although the computing environment of the sensor network (or in general the location information system) may be limited, modem smart phones and Web application servers can have enough computational power to run, for example, state-of-the-art encryption schemes. Since envisioned services in the augmented environment may be Web-based, security mechanisms of Web applications may be used.

An example of an embodiment of the present invention can be deployed using abovementioned Sensor- and the Wi-Fi 802.11x Networks in a cafeteria. The cafeteria in this example provides a space, where people are socializing, exchanging their ideas, and sharing their experience. It therefore provides an interactive environment for social communities.

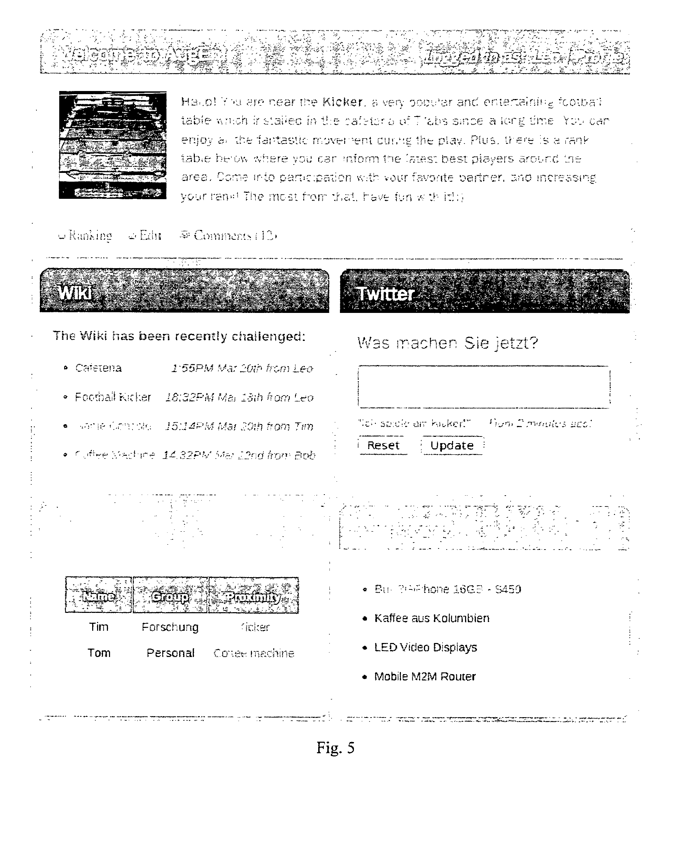

There are several fixed objects in the cafeteria such as, for instance, the coffee machine, the game console, the football table, or a small book shelf. These are natural candidates for augmentation and deployment of the sensor network in an augmented environment. Each of the selected augmented objects is assigned a relay mote running on batteries and detecting and forwarding proximity information of users who carries a beacon mote. As long as users move within the accessible radio range of the augmented objects, the broadcasted radio packets from their beacon are received by the deployed relay motes. In this example, RSSI values are used to obtain proximity information between an individual object and a user. If required, background noise (other radio signals) and channel attenuation can be compensated by conventional communication technologies. A screenshot of the system with simulated data is shown in Fig. 5.

The exemplary implemented web-based application is deployed on the host computer which is also located in the cafeteria. This computer is connected to a Wi-Fi Router so that the users can access the application through any Wi-Fi enabled mobile phone. Additionally, a wireless sensor mote, the host, is attached to the same computer via a USB interface. It gathers radio packets sent by the relay mote, which contain proximity information and user IDs. All incoming RSSI values are then parsed by this gateway mote and then posted to the web application. For programming convenience the final proximity decisions are made at the web application.

Further, behavior models of users can be generated by, for example, collecting data about user behavior in the described exemplary augmented environment. The data collection process can for example be separated into two parts which are conducted simultaneously. One the one hand data is recorded by the wireless mote, on the other hand data is recorded through the web applications.

Combining the two types of networks (sensor network, Wi-Fi network) and making them work collaboratively is very useful for the success of the data collection. For example, for user authentication, the users may receive a UserID at the beginning of an experiment, which helps identifying them for data collection. For simplicity, each user can also be assumed to have a single UserID. In addition, each beacon mote carried by a user during experimentation may be allocated a unique MoteID in order to exactly locate the user.

Consequently, after an experiment, there is a dataset available for each user for post-processing. The services provided in the respective augmented environment can be categorized into groups affiliated with each individual object. For example, whenever a user moves near an object with a relay mote, a positioning notification can be sent to the browser screen of the mobile phone and then the corresponding services are triggered by the server. Also, a time stamped data sequence containing the path of the mobile user as well as the used services, can be periodically stored in a database in the server. By processing this dataset on the server side, the system can filter out off-topic services based on a back-end algorithm and hence the potential of providing more flexible and more intelligent applications.

The server-side can be configured to continuously evaluate the collected data from spatially distributed sources (objects) to extract and observe usage patterns. With such patterns available, a series of user-specified options and services can be designed such as data set management, multi modal interaction, and anomaly detection, to name a few examples.

In this regard, according to the present invention, a system based on existing wireless web applications and sensor network technologies can be provided. Users of the system as well as objects in the environment are associated with individual sensors. The system collects proximity information between objects and users, which is then used by the web application server to provide adaptive services over the wireless network. The individual objects in the surrounding environment of the users become hubs of local, interactive services, thus creating an information-rich environment that is similar to the one on the Internet. The resulting augmented environment, can be used to provide various concepts such as the Internet of things or augmented reality environments.

The present invention has now been described with reference to several embodiments thereof. It will be apparent to those skilled in the art that many changes can be made in the embodiments described without departing from the scope of the present invention. Thus the scope of the present invention should not be limited to the methods and systems described in this application, but only by methods and systems defined in the claims and the equivalents thereof.

## Claims

1. A system for providing adaptive services to mobile wireless communication devices of a mobile wireless network, wherein the mobile wireless network comprises:
- at least one mobile wireless communication device (301),
- at least one wireless access point (302) for communicating with the at least one wireless communication device,
- at least one host server (101) being in communication with the at least one wireless access point,
- at least one sensor means being in communication with the at least one host server, wherein the at least one sensor means provides the at least one host server with proximity or location information about the at least one mobile wireless communication devices, wherein the at least one host server uses the at least one wireless access point to provide services to the at least one mobile wireless communication devices,wherein the provided services are selected and/or adapted by the at least one host according to the proximity or location information corresponding to the respective mobile wireless communication device, and
wherein the at least one sensor means comprises a sensor network comprising sensor motes, wherein the sensor network is preferably a wireless sensor network,
**characterized in that** service related objects (102) located within the coverage area of the mobile wireless network comprise relay motes (502) of the sensor network which collect proximity or location information about mobile wireless communication devices located in the vicinity of the respective service related object,
wherein the mobile wireless communication devices comprise a beacon mote (501) broadcasting messages to the relay motes, wherein the messages are further preferred broadcasted periodically,
wherein the at least one sensor means comprises a gateway (203) connected to the at least one host server, wherein the gateway wirelessly receives proximity or location information about mobile wireless communication devices from the relay motes, and
wherein the proximity or location information about mobile wireless communication devices received by the gateway comprises a received signal strength indicator (RSSI), wherein the received signal strength indicator (RSSI) provides spatial information about a wireless communication device relative to a service related object.

2. The system according to claim 1, wherein the at least one wireless access point for communicating with the wireless communication devices is a Bluetooth, Wi-Fi, WiMax, Infrared or UMTS network access point.

3. The system according to claim 1 or 2, wherein the services provided by the at least one host to the one wireless communication device of the mobile wireless network and which are selected and/or adapted according to the proximity or location information corresponding to the respective wireless communication device is a web-based application, comprising dynamic contents, and further preferred providing social-network platform or collaborative working platform services.

4. The system according to any of the preceding claims, wherein the service provided by the at least one host server to a wireless communication device of the mobile wireless network and which is selected and/or adapted according to the proximity or location information corresponding to the respective wireless communication device is invoked when the respective wireless communication device approaches a service related object located within the coverage area of the mobile wireless network and wherein the service is related to the approached object.

5. The system according to any of the preceding claims, wherein the service provided by the at least one host server to a wireless communication device of the mobile wireless network and which is selected and/or adapted according to the proximity or location information corresponding to the respective wireless communication device is further selected and/or adapted according to preferences and/or activities of the user of the respective wireless communication device over time.

6. The system according to any of the preceding claims, wherein the users of the wireless communication devices of the mobile wireless network are identified by the at least one host server using digital identities for providing privacy based services.

7. The system according to any of the preceding claims, wherein a wireless communication device of the mobile wireless network temporarily associates its beacon mote with a respective digital identity taken from a common pool corresponding to a service provided by the at least one host server, preferably during a respective login.

8. The system according claim 6 or 7, wherein the at least one host server comprises a database containing information about said preferences and/or activities of the user of the respective wireless communication device over time.

9. A method for providing adaptive services to users of a mobile wireless network comprising at least one wireless communication device (301), at least one sensor means, at least one host server (101) and at least one access point (302), comprising the steps of:
- using the at least one sensor means to determine proximity or location information about the at least one mobile wireless communication device,
- using the determined proximity or location information about the wireless communication device to select and/or adapt a service according to the proximity or location information corresponding to the respective wireless communication device,
- providing the selected and/or adapted service to the respective wireless communication device by having the at least one host server use the at least one wireless access point of the mobile wireless network to communicate with the mobile wireless communication device,
wherein the step of selecting and/or adapting a service according to the proximity or location information corresponding to the respective wireless communication device comprises the step of evaluating proximity or location information to relate a wireless communication device'sproximity or location to a service related object (102), wherein the proximity or location information comprises a received signal strength indicator (RSSI).

10. The method according to claim 9, wherein the step of selecting and/or adapting a service according to the proximity or location information corresponding to the respective wireless communication device further comprises the step of evaluating information about the activity of the user (103) of the respective wireless communication device over time, by utilizing a user model which is related to targeted advertisement, and
wherein the step of selecting and/or adapting a service according to the proximity or location information corresponding to a wireless communication device or the step of evaluating information about the activity of the respective user of the wireless communication device over time comprises steps of machine learning and/or optimization.

11. A computer program performing the steps of the method according to claim, 9 or 10.

12. A digital storage medium containing the computer program of claim 11.

## Patentansprüche

1. System zum Bereitstellen adaptiver Dienste für mobile Drahtloskommunikationsvorrichtungen eines mobilen Drahtlosnetzes, wobei das mobile Drahtlosnetz Folgendes aufweist:
- wenigstens eine mobile Drahtloskommunikationsvorrichtung (301),
- wenigstens einen Drahtloszugangspunkt (302) zum Kommunizieren mit der wenigstens einen Drahtloskommunikationsvorrichtung,
- wenigstens einen Hostserver (101), der mit dem wenigstens einen Drahtloszugangspunkt kommuniziert,
- wenigstens eine Sensoreinrichtung, die mit dem wenigstens einen Hostserver kommuniziert, wobei die wenigstens eine Sensoreinrichtung den wenigstens einen Hostserver mit Nähe- oder Ortsinformationen über die wenigstens eine mobile Drahtloskommunikationsvorrichtung versieht, wobei der wenigstens eine Hostserver den wenigstens einen Drahtloszugangspunkt verwendet, um der wenigstens einen mobilen Drahtloskommunikationsvorrichtung Dienste bereitzustellen, wobei die bereitgestellten Dienste durch den wenigstens einen Host gemäß den Nähe- oder Ortsinformationen, die der jeweiligen mobilen Drahtloskommunikationsvorrichtung entsprechen, ausgewählt und/oder angepasst werden, und
wobei die wenigstens eine Sensoreinrichtung ein Sensometz mit Sensormotes aufweist, wobei das Sensometz vorzugsweise ein drahtloses Sensometz ist,
**dadurch gekennzeichnet, dass**
dienstbezogene Objekte (102), die sich innerhalb des Versorgungsbereichs des mobilen Drahtlosnetzes befinden, Relaismotes (502) des Sensornetzes aufweisen, die Nähe- oder Ortsinformationen über mobile Drahtloskommunikationsvorrichtungen sammeln, die sich in der Umgebung des jeweiligen dienstbezogenen Objekts befinden,
wobei die mobilen Drahtloskommunikationsvorrichtungen ein Bakenmote (501) aufweisen, das Nachrichten zu den Relaismotes ausstrahlt, wobei die Nachrichten weiter bevorzugt periodisch ausgestrahlt werden,
wobei die wenigstens eine Sensoreinrichtung einen Gateway (203) aufweist, der mit dem wenigstens einen Hostserver verbunden ist, wobei der Gateway drahtlos Nähe- oder Ortsinformationen über mobile Drahtloskommunikationsvorrichtungen von den Relaismotes empfängt, und
wobei die Nähe- oder Ortsinformationen über mobile Drahtloskommunikationsvorrichtungen, die vom Gateway empfangen werden, einen Empfangssignalstärkeindikator (RSSI) aufweisen, wobei der Empfangssignalstärkeindikator (RSSI) räumliche Informationen über eine Drahtloskommunikationsvorrichtung in Bezug auf ein dienstbezogenes Objekt bereitstellt.

2. System nach Anspruch 1, wobei der wenigstens eine Drahtloszugangspunkt zum Kommunizieren mit den Drahtloskommunikationsvorrichtungen ein Bluetooth-, WiFi-, WiMax-, Infrarot- oder UMTS-Netzzugangspunkt ist.

3. System nach Anspruch 1 oder 2, wobei die durch den wenigstens einen Host der einen Drahtloskommunikationsvorrichtung des mobilen Drahtlosnetzes bereitgestellten Dienste, die gemäß den Nähe- oder Ortsinformationen, die der jeweiligen Drahtloskommunikationsvorrichtung entsprechen, ausgewählt und/oder angepasst werden, eine webbasierte Anwendung sind, die dynamische Inhalte aufweist, und weiter bevorzugt Soziales-Netzwerk-Plattform- oder Zusammenarbeitsplattformdienste bereitstellen.

4. System nach einem der vorhergehenden Ansprüche, wobei der durch den wenigstens einen Hostserver einer Drahtloskommunikationsvorrichtung des mobilen Drahtlosnetzes bereitgestellte Dienst, der gemäß den Nähe- oder Ortsinformationen, die der jeweiligen Drahtloskommunikationsvorrichtung entsprechen, ausgewählt und/oder angepasst wird, aufgerufen wird, wenn sich die jeweilige Drahtloskommunikationsvorrichtung einem dienstbezogenen Objekt nähert, das sich innerhalb des Versorgungsbereichs des mobilen Drahtlosnetzes befindet, und wobei sich der Dienst auf das angenäherte Objekt bezieht.

5. System nach einem der vorhergehenden Ansprüche, wobei der durch den wenigstens einen Hostserver einer Drahtloskommunikationsvorrichtung des mobilen Drahtlosnetzes bereitgestellte Dienst, der gemäß den Nähe- oder Ortsinformationen, die der jeweiligen Drahtloskommunikationsvorrichtung entsprechen, ausgewählt und/oder angepasst wird, ferner gemäß Präferenzen und/oder Aktivitäten des Benutzers der jeweiligen Drahtloskommunikationsvorrichtung über die Zeit ausgewählt und/oder angepasst wird.

6. System nach einem der vorhergehenden Ansprüche, wobei die Benutzer der Drahtloskommunikationsvorrichtungen des mobilen Drahtlosnetzes durch den wenigstens einen Hostserver unter Verwendung digitaler Identitäten zum Bereitstellen privatheitsbasierter Dienste identifiziert werden.

7. System nach einem der vorhergehenden Ansprüche, wobei eine Drahtloskommunikationsvorrichtung des mobilen Drahtlosnetzes ihr Bakenmote vorübergehend mit einer jeweiligen digitalen Identität assoziiert, die aus einem gemeinsamen Pool entnommen wurde, der einem durch den wenigstens einen Hostserver, vorzugsweise während einer jeweiligen Anmeldung, bereitgestellten Dienst entspricht.

8. System nach Anspruch 6 oder 7, wobei der wenigstens eine Hostserver eine Datenbank aufweist, die Informationen über die Präferenzen und/oder Aktivitäten des Benutzers der jeweiligen Drahtloskommunikationsvorrichtung über die Zeit enthält.

9. Verfahren zum Bereitstellen adaptiver Dienste für Benutzer eines mobilen Drahtlosnetzes, das wenigstens eine Drahtloskommunikationsvorrichtung (301), wenigstens eine Sensoreinrichtung, wenigstens einen Hostserver (101) und wenigstens einen Zugangspunkt (302) aufweist, welches die folgenden Schritte aufweist:
- Verwenden der wenigstens einen Sensoreinrichtung zum Bestimmen von Nähe- oder Ortsinformationen über die wenigstens eine mobile Drahtloskommunikationsvorrichtung,
- Verwenden der bestimmten Nähe- oder Ortsinformationen über die Drahtloskommunikationsvorrichtung zum Auswählen und/oder Anpassen eines Dienstes gemäß den Nähe- oder Ortsinformationen, die der jeweiligen Drahtloskommunikationsvorrichtung entsprechen,
- Bereitstellen des ausgewählten und/oder angepassten Dienstes für die jeweilige Drahtloskommunikationsvorrichtung, indem der wenigstens eine Hostserver veranlasst wird, den wenigstens einen Drahtloszugangspunkt des mobilen Drahtlosnetzes zu verwenden, um mit der mobilen Drahtloskommunikationsvorrichtung zu kommunizieren,
wobei der Schritt des Auswählens und/oder Anpassens eines Dienstes gemäß den Nähe- oder Ortsinformationen, die der jeweiligen Drahtloskommunikationsvorrichtung entsprechen, den Schritt des Beurteilens von Nähe- oder Ortsinformationen aufweist, um die Nähe oder den Ort einer Drahtloskommunikationsvorrichtung auf ein dienstbezogenes Objekt (102) zu beziehen, wobei die Nähe- oder Ortsinformationen einen Empfangssignalstärkeindikator (RSSI) aufweisen.

10. Verfahren nach Anspruch 9, wobei der Schritt des Auswählens und/oder Anpassens eines Dienstes gemäß den Nähe- oder Ortsinformationen, die der jeweiligen Drahtloskommunikationsvorrichtung entsprechen, ferner den Schritt des Beurteilens von Informationen über die Aktivität des Benutzers (103) der jeweiligen Drahtloskommunikationsvorrichtung über die Zeit durch die Verwendung eines Benutzermodells, das sich auf Zielwerbung bezieht, aufweist, und
wobei der Schritt des Auswählens und/oder Anpassens eines Dienstes gemäß den Nähe- oder Ortsinformationen, die einer Drahtloskommunikationsvorrichtung entsprechen, oder der Schritt des Beurteilens von Informationen über die Aktivität des jeweiligen Benutzers der Drahtloskommunikationsvorrichtung über die Zeit Schritte des maschinellen Lernens und/oder der Optimierung aufweist.

11. Computerprogramm, das die Schritte des Verfahrens nach Anspruch 9 oder 10 ausführt.

12. Digitales Speichermedium, welches das Computerprogramm nach Anspruch 11 enthält.

## Revendications

1. Système permettant de fournir des services adaptatifs à des appareils mobiles de communication sans fil d'un réseau mobile sans fil, ledit réseau mobile sans fil comprenant :
- au moins un appareil mobile de communication sans fil (301),
- au moins un point d'accès sans fil (302) pour la communication avec le ou les appareils de communication sans fil,
- au moins un serveur hôte (101) en communication avec le ou les points d'accès sans fil,
- au moins un moyen de détection en communication avec le ou les serveurs hôtes, le ou les moyens de détection délivrant au ou aux serveurs hôtes une information de proximité ou de localisation sur le ou les appareils mobiles de communication sans fil, le ou les serveurs hôtes utilisant le ou les points d'accès sans fil pour fournir des services au ou aux appareils mobiles de communication sans fil, les services fournis étant sélectionnés et/ou adaptés par le ou les hôtes en fonction de l'information de proximité ou de localisation correspondant à l'appareil mobile de communication sans fil respectif, et le ou les moyens de détection comprenant un réseau de détection comportant des cellules de capteurs, ledit réseau de détection étant préférentiellement un réseau de détection sans fil, **caractérisé**
**en ce que** des objets relatifs à un service (102) situés à l'intérieur de la zone de couverture du réseau mobile sans fil comprennent des cellules de relais (502) du réseau de détection qui collectent l'information de proximité ou de localisation relative aux appareils mobiles de communication sans fil situés à proximité de l'objet relatif à un service respectif,
les appareils mobiles de communication sans fil comprenant une cellule balise (501) diffusant des messages aux cellules de relais, lesdits messages étant en outre préférentiellement diffusés périodiquement,
le ou les moyens de détection comprenant une passerelle (203) reliée au ou aux serveurs hôtes, ladite passerelle recevant des cellules de relais, par liaison sans fil, l'information de proximité ou de localisation relative aux appareils mobiles de communication sans fil, et
**en ce que** l'information de proximité ou de localisation relative aux appareils mobiles de communication sans fil reçue par la passerelle comprend un indicateur d'intensité du signal reçu (RSSI), ledit indicateur d'intensité du signal reçu (RSSI) délivrant une information spatiale sur un appareil de communication sans fil, quant à l'objet relatif à un service.

2. Système selon la revendication 1, où le ou les points d'accès sans fil pour la communication avec les appareils de communication sans fil sont des points d'accès de réseau Bluetooth, Wi-Fi, WiMax, Infrared ou UMTS.

3. Système selon la revendication 1 ou la revendication 2, où le service fourni par le ou les hôtes à un appareil de communication sans fil du réseau mobile sans fil, et sélectionné et/ou adapté en fonction de l'information de proximité ou de localisation correspondant à l'appareil de communication sans fil respectif, est une application Web comprenant des contenus dynamiques, et fournissant en outre préférentiellement des services de plate-forme de réseau social ou de plate-forme de travail collaborative.

4. Système selon l'une des revendications précédentes, où le service fourni par le ou les serveurs hôtes à un appareil de communication sans fil du réseau mobile sans fil, et sélectionné et/ou adapté en fonction de l'information de proximité ou de localisation correspondant à l'appareil de communication sans fil respectif, est appelé quand l'appareil de communication sans fil respectif approche d'un objet relatif à un service situé à l'intérieur de la zone de couverture du réseau mobile sans fil, le service étant relatif à l'objet approché.

5. Système selon l'une des revendications précédentes, où le service fourni par le ou les serveurs hôtes à un appareil de communication sans fil du réseau mobile sans fil, et sélectionné et/ou adapté en fonction de l'information de proximité ou de localisation correspondant à l'appareil de communication sans fil respectif, est en outre sélectionné et/ou adapté en fonction de préférences et/ou d'activités de l'utilisateur de l'appareil de communication sans fil respectif dans la durée.

6. Système selon l'une des revendications précédentes, où les utilisateurs des appareils de communication sans fil du réseau mobile sans fil sont identifiés par le ou les serveurs hôtes au moyen d'identités numériques pour fournir des services sur une base privée.

7. Système selon l'une des revendications précédentes, où un appareil de communication sans fil du réseau mobile sans fil associe temporairement sa cellule balise à une identité numérique respective prélevée dans un ensemble commun correspondant à un service fourni par le ou les serveurs hôtes, préférentiellement pendant une ouverture de session respective.

8. Système selon la revendication 6 ou la revendication 7, où le ou les serveurs hôtes comprennent une base de données contenant des informations sur les préférences et/ou les activités de l'utilisateur de l'appareil de communication sans fil respectif dans la durée.

9. Procédé de fourniture de services adaptatifs aux utilisateurs d'un réseau mobile sans fil comprenant au moins un appareil de communication sans fil (301), au moins un moyen de détection, au moins un serveur hôte (101) et au moins un point d'accès (302), comprenant les étapes suivantes :
- utilisation du ou des moyens de détection pour déterminer l'information de proximité ou de localisation sur le ou les appareils mobiles de communication sans fil,
- exploitation de l'information de proximité ou de localisation sur l'appareil de communication sans fil déterminée pour sélectionner et/ou adapter un service en fonction de l'information de proximité ou de localisation correspondant à l'appareil de communication sans fil respectif,
- fourniture du service sélectionné et/ou adapté à l'appareil de communication sans fil respectif, le ou les serveurs hôtes utilisant le ou les points d'accès sans fil du réseau mobile sans fil pour communiquer avec l'appareil mobile de communication sans fil, l'étape de sélection et/ou d'adaptation d'un service en fonction de l'information de proximité ou de localisation correspondant à l'appareil de communication sans fil respectif comprenant l'étape d'évaluation de l'information de proximité ou de localisation pour associer la proximité ou la localisation d'un appareil de communication sans fil à un objet relatif à un service (102), l'information de proximité ou de localisation contenant préférentiellement un indicateur d'intensité du signal reçu (RSSI).

10. Procédé selon la revendication 9, où l'étape de sélection et/ou d'adaptation d'un service en fonction de l'information de proximité ou de localisation correspondant à l'appareil de communication sans fil respectif comprend en outre l'étape d'évaluation d'une information sur l'activité de l'utilisateur (103) de l'appareil de communication sans fil dans la durée, recourant à un modèle d'utilisateur associé à une publicité ciblée, et
où l'étape de sélection et/ou d'adaptation d'un service en fonction de l'information de proximité ou de localisation correspondant à un appareil de communication sans fil ou l'étape d'évaluation d'une information sur l'activité de l'utilisateur de l'appareil de communication sans fil respectif dans la durée comprennent les étapes d'apprentissage et/ou d'optimisation machine.

11. Programme informatique exécutant les étapes du procédé selon la revendication 9 ou la revendication 10.

12. Support de stockage numérique contenant le programme informatique selon la revendication 11.
